# FASCICULE DE BREVET EUROPEEN

(11) **EP 1 524 138 B1**
(45) Date de publication et mention de la délivrance du brevet: **14.02.2007**
(21) Numéro de dépôt: 04292367.2
(22) Date de dépôt: 05.10.2004
(51) Int. Cl.: B60H 1/00, B62D 65/00

(54) **Habitacles à deux modules, et procédé de montage d'un faux plancher dans un tel habitacle**
Cockpit mit zwei Modulen, und Montageverfahren für einen doppelten Boden in einem derartigen Cockpit
Cockpit with two modules, and a mounting method for a false bottom in such a cockpit

(30) Priorité: 14.10.2003 FR 0312013
(43) Date de publication de la demande: 20.04.2005
(73) Titulaire: Faurecia Automotive Industrie, 92000 Nanterre (FR)
(72) Inventeur: Decorme, Jacques, 08900 Montcy Nôtre Dame (FR); Marcq, Philippe, 08210 Mouzon (FR)
(74) Mandataire: Domenego, Bertrand

(56) Documents cités:
- FR-A- 2 744 978
- FR-A- 2 774 351
- US-A1- 2003 038 470

## Description

La présente invention concerne un habitacle de véhicule automobile pourvu d'au moins deux modules comprenant des conduits d'aération devant être connectés ensemble.

En particulier, la présente invention concerne un habitacle de véhicule automobile pourvu d'un faux plancher porteur comprenant des conduits d'air et d'un dispositif de production d'air connecté aux conduits d'air. Un tel dispositif est connu du document US 2003/038470.

Une des tendances fortes dans le domaine de l'automobile est d'assurer un montage du véhicule par l'assemblage de modules pré-montés intégrant de nombreuses fonctions. On peut citer par exemple les modules de cockpits, les modules de portes, les modules de plancher ou de faux-plancher, etc...

Ces modules complexes impliquent une cinématique de montage adéquate pour pouvoir assurer dans les meilleures conditions d'ergonomie et de rapidité l'assemblage et l'interconnexion des modules entre eux.

C'est en particulier le cas pour les modules devant assurer entre eux la continuité d'un flux d'aération, car il faut tout à la fois prendre en compte l'imbrications de ces modules entre eux, mais aussi avoir un dispositif de connexion entre les conduits d'aérations de chaque module avec une étanchéité adéquate et accessible et opérable par le monteur ou le robot.

A cet effet, l'invention a pour objet un habitacle de véhicule à moteur dans lequel les connexions entre les conduits d'air de deux modules plus ou moins imbriqués sont réalisées par des moyens mobiles pré-montés sur les conduits d'un des modules ayant une position escamotée d'assemblage des modules entre eux ou dans l'habitacle et une position opérationnelle permettant, une fois les modules assemblés, d'assurer la connexion simple et rapide des conduits d'aération de chaque module.

Selon un mode particulier de réalisation, l'équipement selon l'invention s'applique à un faux-plancher et à un dispositif de production d'air.

A cet égard, l'invention concerne un habitacle de véhicule à moteur comprenant au moins un élément de faux-plancher comprenant au moins un conduit d'aération, et au moins un dispositif de production d'air solidaire du véhicule à moteur pour alimenter ledit conduit d'aération.

Selon l'invention, il comprend un élément de connexion mobile pour connecter une extrémité libre dudit conduit d'aération avec au moins une sortie du dispositif de production d'air, le dit élément de connexion étant monté mobile soit sur ledit conduit d'aération soit sur ladite sortie du dispositif de production d'air, entre une position escamotée dans laquelle le conduit d'aération et la sortie du dispositif de production d'air sont libres l'un par rapport à l'autre, permettant un mouvement relatif de l'élément de faux plancher par rapport à l'habitacle du véhicule à moteur, et une position opérationnelle, dans laquelle l'élément de connexion assure la connexion entre l'extrémité libre du conduit d'aération et la sortie du dispositif de production d'air.

Dans un mode de réalisation, il y a au moins deux conduits d'air chacun connecté à une sortie du dispositif de production d'air, et un élément de connexion unique pour assurer toutes les connexions en une opération.

Le faux plancher peut être un faux plancher de type suspendu double-coque, une face supérieure étant prévue pour constituer une partie du sol de l'habitacle du véhicule, et une face inférieure étant prévue pour s'étendre essentiellement au-dessus du plancher de la caisse du véhicule, lesdites faces formant entre elles au moins partiellement au moins un conduit d'air intégré.

Dans ce cas, au moins un conduit d'air peut comprendre un élément de conduit intermédiaire compris entre un conduit d'air intégré et une sortie du dispositif de production d'air.

Et s'il y a au moins deux conduits d'air comprenant chacun un élément de conduit intermédiaire ayant une première extrémité emmanchée dans un conduit d'air intégré, et une extrémité libre, ces extrémités libres peuvent être pourvues d'un élément de positionnement relatif avec les autres extrémités libres des autres conduits intermédiaires.

Avantageusement, l'élément de positionnement relatif est le même que l'élément de connexion.

Dans une forme de réalisation particulière, l'élément de connexion comprend un manchon sensiblement coaxial avec la ou chacune des extrémité(s) libre(s) et sensiblement coaxial avec la ou chacune des sorties du dispositif de production d'air, l'élément de connexion étant mobile selon l'axe de coaxialité entre la position escamotée dans laquelle il est a recouvrement soit avec la ou chacune des extrémité(s) libre(s), soit avec la ou chacune des sorties du dispositif de production d'air, et une position opérationnelle dans laquelle il est à recouvrement avec la ou chacune des extrémité(s) libre(s) et la ou chacune des sortie(s) du dispositif de production d'air

Une autre caractéristique de l'invention résulte de ce que l'élément de connexion comprend des moyens d'étanchéité permettant d'assurer, en position opérationnelle, une étanchéité de la connexion par rapport à l'habitacle du véhicule.

L'invention concerne aussi un procédé de montage d'un faux plancher comprenant des conduits d'aération ayant des extrémité libres dans un habitacle véhicule pourvu d'un dispositif de production d'air ayant des sorties d'air à connecter aux extrémités libres des conduits d'aération, les extrémités libres ou les sorties étant pourvues d'un élément de connexion mobile entre :
- une position escamotée dans laquelle les extrémités libres et les sorties du dispositif de production d'air sont libres les unes par rapport aux autres, permettant un mouvement relatif de l'élément de faux plancher par rapport à l'intérieur du véhicule à moteur, et
- une position opérationnelle dans laquelle, il assure la connexion entre les extrémités libres et les sorties du dispositif de production d'air.

Selon l'invention :
- on monte et on positionne le faux-plancher dans l'habitacle véhicule notamment par glissement dudit faux-plancher sous le dispositif de production d'air, positionnant les extrémités libres en regard des sorties, l'élément de connexion étant en position escamotée, et
- on fait passer l'élément de connexion de la position escamoté à la position opérationnelle, pour assurer la connexion entre les extrémités libres et les sorties du dispositif de production d'air.

Dans le cas du faux plancher avec conduits intégrés et conduits intermédiaires, préalablement à l'étape de montage et positionnement du faux plancher dans l'habitacle du véhicule :
- on monte des éléments de conduit intermédiaires ayant chacun une première extrémité emmanchée dans un conduit d'air intégré correspondant, et
- on équipe l'extrémité libre de chaque l'élément de conduit intermédiaire avec un élément de positionnement relatif avec les autres extrémités libre des autres conduits intermédiaires.

L'invention sera mieux comprise à la lecture de la description qui va suivre, donnée uniquement à titre d'exemple et faite en se référant aux dessins annexés, sur lesquels :
- la Figure 1 est une vue schématique d'un habitacle selon l'invention;
- la Figure 2 est une vue schématique en coupe d'une partie de la figure 1;
- les Figures 3A et 3B sont une illustration schématique d'une partie des étapes d'un procédé selon l'invention.

L'invention concerne un habitacle de véhicule à moteur 1 comprenant au moins 2 modules 2,3 fonctionnels et structurels tels qu'il en existe dans le domaine de l'automobile. On citera à titre d'exemples non-limitatifs, le cockpit ou l'un de ses sous-modules (bloc climatisation, airbag, traverse etc...), le module de porte, le plancher ou le faux plancher. D'une manière plus générale on entend par module tout dispositif supportant et/ou intégrant certaines des fonctions et fonctionnalités classiques d'un véhicule automobile.

En particulier, les modules 2,3 de l'habitacle selon la présente invention comprennent au moins une fonction de génération et/ou de transport d'un flux d'air à travers des conduits d'air 4,5.

L'un des buts de la présente invention est de permettre le montage et le positionnement des modules 2,3 dans l'habitacle 1 puis la connexion rapide des conduits d'air 4,5 de chaque module 2,3 entre eux.

A cet effet, l'invention propose un élément de connexion 6 mobile pour connecter un premier conduit d'aération 4 du premier module 2 avec un deuxième conduit d'aération 5 du deuxième module 3.

L'élément de connexion 6 est monté mobile sur l'un des conduit d'aération 4,5, entre une position escamotée représentée en noir plein sur la figure 2 dans laquelle les conduits d'aération 4,5 sont libres l'un par rapport à l'autre, permettant un mouvement relatif de positionnement des modules 2,3 l'un par rapport à l'autre ou par rapport à l'habitacle 1, et une position opérationnelle représentée en pointillés sur la figure 2 dans laquelle, il assure la connexion entre les conduits d'aération 4 et 5.

Dans la suite de la description, nous nous attacherons à décrire un mode de réalisation particulier concernant le positionnement et la connexion d'un faux-plancher structurel 2 pourvu d'au moins un conduit d'air 4 par rapport à un dispositif de production d'air 3 (bloc de climatisation) pourvu d'au moins une sortie d'air 5 destinée à alimenter le conduit d'air 4.

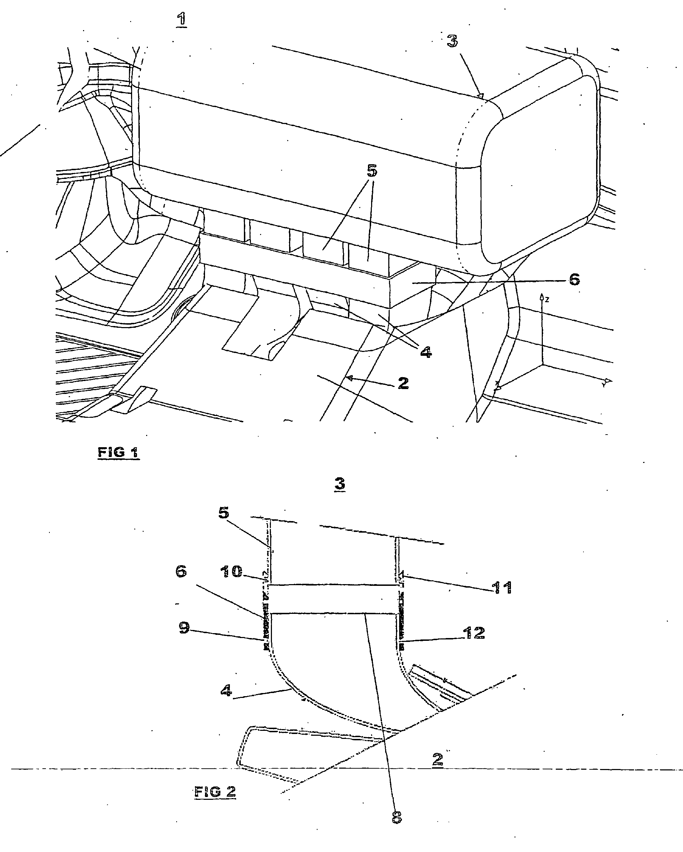

Comme on le voit sur la figure 1, le nombre de conduits d'air et de sorties d'air peut être supérieur à 1. En l'occurrence sur la figure 1, il s'agit de 4 connections distinctes, mais l'élément de connexion 6 est commun au 4 connexions. Il se présente sous la forme d'une succession de manchons solidarisés les uns aux autres, chaque manchon 7 étant sensiblement coaxial avec une extrémité libre 8 d'un conduit d'air 4 et sensiblement coaxial avec une sortie d'air 5 du dispositif de production d'air 3.

Cet élément de connexion est mobile en translation entre la position escamotée dans laquelle il est a recouvrement soit avec chacune des extrémités libres 8 des conduits d'air, soit avec chacune des sorties d'air 5 du dispositif de production d'air 3, et une position opérationnelle dans laquelle il est à recouvrement avec chacune des extrémités libre 8 et chacune des sorties d'air 5 du dispositif de production d'air 3.

Sur la figure 2, l'élément de connexion 6 est monté sur l'extrémité libre 8 d'un conduit d'air 4. L'élément de connexion 6 comporte des moyens de maintien dans l'une ou l'autre de ses positions. Un orifice 9 coopérant avec un ergot 12 localisé sur la paroi de l'extrémité libre 8 du conduit d'air permet de maintenir l'élément de connexion en position escamotée. Un dispositif à clips élastique 11 coopérant avec une saille 10 localisée sur la périphérie de la sortie d'air 5 assure le maintien dans la position opérationnelle. Le passage de l'une à l'autre des positions se fait par déverrouillage à force de l'orifice 9 et de l'ergot 12, puis une translation de l'élément de connexion 6 vers la sortie d'air 5 jusqu'à enclenchement à force du ou des clips élastiques 11 sur la saillie 10.

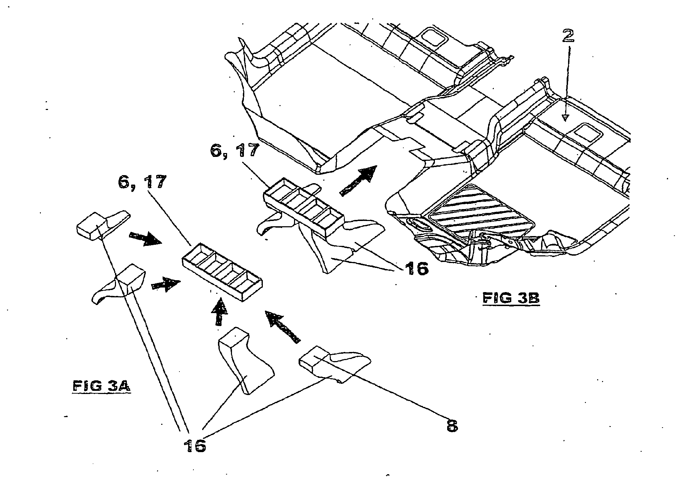

Dans un mode de réalisation représenté sur la figure 3A, 3B, le faux plancher 2 est un faux plancher de type suspendu double-coque, une face supérieure étant prévue pour constituer une partie du sol de l'habitacle du véhicule, et une face inférieure étant prévue pour s'étendre essentiellement au-dessus du plancher de la caisse du véhicule, lesdites faces formant entre elles au moins partiellement au moins un conduit d'air intégré. Pour plus de détail sur ce type de faux plancher, on pourra se reporter à EP 1464567.

Dans ce cas, il se peut que chaque conduit d'air 4 comprenne un élément de conduit intermédiaire 16 prolongeant un conduit d'air intégré.

Chaque élément de conduit intermédiaire 16 a une première extrémité emmanchée dans un conduit d'air intégré, et une extrémité libre 8.

Avantageusement, lors de la mise en place de ces conduits intermédiaires 16 dans les conduits intégrés il est utilisé un élément de positionnement relatif 17 des conduits intermédiaires.

L'une des caractéristiques de la présente invention consiste à ce que l'élément de connexion 6 intègre cette fonctionnalité. Ainsi, dans un premier temps l'élément de connexion 6, 17 assure le positionnement relatif des conduits intermédiaires 16 entre eux et par rapport aux conduits intégrés, puis dans un deuxième temps assure la connexion de chacun des conduits intermédiaires 16 avec la sortie d'air 5 correspondante.

De façon non représentée, l'élément de connexion 6 présente des moyens d'étanchéité assurant, en position opérationnelle une étanchéité des connections vis à vis de l'habitacle 1.

La présente invention concerne aussi un procédé de montage d'un faux plancher dans un habitacle véhicule pourvu d'un dispositif de production d'air.

Selon ce procédé :
- on monte et positionne le faux-plancher dans l'habitacle véhicule par exemple par glissement du faux-plancher sous le dispositif de production d'air, positionnant par la même étape les extrémités libres des conduits d'air en regard des sorties d'air, l'élément de connexion étant en position escamotée, et
- on fait passer l'élément de connexion de la position escamoté à la position opérationnelle, pour assurer la connexion entre les extrémités libres des conduits d'air et les sorties d'air du dispositif de production d'air.

Dans le cas du faux plancher de type suspendu double-coque, dans des étapes préalables à l'étape de montage et positionnement du faux plancher dans l'habitacle du véhicule :
- on monte des éléments de conduit intermédiaires par emmanchement dans les conduits d'air intégré correspondant, et
- on équipe les extrémités libres avec un élément de connexion permettant un positionnement relatif des extrémités libres entre elles.

Dans une variante de réalisation, on inverse les deux étapes ci-dessus.

Ces étapes supplémentaires sont illustrées par les figures 3A et 3B.

## Revendications

1. Habitacle (1) de véhicule à moteur comprenant au moins un premier module (2) comprenant au moins un premier conduit d'aération (4), et au moins un deuxième module (3) comprenant un deuxième conduit d'aération (5) connecté au premier conduit d'aération (4), **caractérisé en ce qu**'il comprend un élément de connexion (6) mobile pour connecter le premier conduit d'aération (4) avec le deuxième conduit d'aération (5), le dit élément de connexion (6) étant monté mobile sur l'un des conduit d'aération (4,5), entre une position escamotée dans laquelle les conduits d'aération (4,5) sont libres l'un par rapport à l'autre, permettant un mouvement relatif de positionnement des modules (2,3)l'un par rapport à l'autre, et une position opérationnelle, dans laquelle l'élément de connexion (6) assure la connexion entre les conduits d'aération (4,5).

2. Habitacle de véhicule selon la revendication 1, **caractérisé en ce que** le premier module (2) est formé par au moins un élément de faux-plancher (2) le deuxième module (3) comprend au moins un dispositif de production d'air (3) solidaire de l'habitacle (1) pour alimenter ledit premier conduit d'aération (4), **en ce que** l' élément de connexion (6) mobile est adapté pour connecter une extrémité libre (8) dudit conduit d'aération (4) avec au moins une sortie (5) du dispositif de production d'air (3), le dit élément de connexion (6) étant monté mobile soit sur l'extrémité libre (8) dudit conduit d'aération (4) soit sur ladite sortie (5) du dispositif de production d'air (3), entre une position escamotée dans laquelle l'extrémité libre (8) du conduit d'aération (4) et la sortie (5) du dispositif de production d'air (3) sont libres l'une par rapport à l'autre, permettant un mouvement relatif de l'élément de faux plancher (2) par rapport à l'habitacle (1) du véhicule à moteur, et une position opérationnelle, dans laquelle l'élément de connexion (6) assure la connexion entre l'extrémité libre (8) du conduit d'aération (4) et la sortie (5) du dispositif de production d'air (3).

3. Habitacle de véhicule selon la revendication 2, **caractérisé en ce qu**'il comprend au moins deux conduits d'air chacun connecté à une sortie du dispositif de production d'air, et un élément de connexion unique pour assurer toutes les connexions en une opération.

4. Habitacle de véhicule selon la revendication 2 ou 3, **caractérisé en ce que** le faux plancher est un faux plancher de type suspendu double-coque, une face supérieure étant prévue pour constituer une partie du sol de l'habitacle du véhicule, et une face inférieure étant prévue pour s'étendre essentiellement au-dessus du plancher de la caisse du véhicule, lesdites faces formant entre elles au moins partiellement au moins un conduit d'air intégré.

5. Habitacle de véhicule selon la revendication 4, **caractérisé en ce qu**'au moins un conduit d'air comprend un élément de conduit intermédiaire (16) compris entre un conduit d'air intégré et une sortie du dispositif de production d'air.

6. Habitacle de véhicule selon la revendication 5, **caractérisé en ce qu**'il comprend au moins deux conduits d'air comprenant chacun un élément de conduit intermédiaire (16) ayant une première extrémité emmanchée dans un conduit d'air intégré, et une extrémité libre pourvue d'un élément de positionnement relatif (6, 17) avec les autres extrémités libre des autres conduits intermédiaires.

7. Habitacle selon la revendication 6, **caractérisé en ce que** l'élément de positionnement relatif est le même que l'élément de connexion.

8. Habitacle de véhicule selon l'une quelconque des revendications 2 à 7, **caractérisé en ce que** l'élément de connexion (6) comprend un manchon sensiblement coaxial avec la ou chacune des extrémité(s) libre(s) (8) et sensiblement coaxial avec la ou chacune des sorties (5) du dispositif de production d'air, l'élément de connexion (6) étant mobile selon l'axe de coaxialité entre la position escamotée dans laquelle il est a recouvrement soit avec la ou chacune des extrémité(s) libre(s) (8), soit avec la ou chacune des sorties (5) du dispositif de production d'air, et une position opérationnelle dans laquelle il est à recouvrement avec la ou chacune des extrémité (s) libre (s) (8) et la ou chacune des sortie(s) (5) du dispositif de production d'air.

9. Habitacle de véhicule selon l'une quelconque des revendication 1 à 8, **caractérisé en ce que** le l'élément de connexion (6) comprend des moyens d'étanchéité permettant d'assurer, en position opérationnelle, une étanchéité de la connexion entre la ou chacune des extrémité(s) libre(s) (8) et la ou chacune des sortie(s) (5) du dispositif de production d'air par rapport à l'habitacle du véhicule.

10. Procédé de montage d'un faux plancher (2) comprenant des conduits d'aération ayant des extrémités libres (8), dans un habitacle véhicule pourvu d'un dispositif de production d'air (3) ayant des sorties d'air (5) à connecter aux extrémités libres (8) des conduits d'aération, les extrémités libres (8) ou les sorties (5) étant pourvues d'un élément de connexion (6) mobile entre :
- une position escamotée dans laquelle les extrémités libres (8) et les sorties (5) du dispositif de production d'air sont libres les unes par rapport aux autres, permettant un mouvement relatif du faux plancher (2) par rapport à l'intérieur du véhicule à moteur, et
- une position opérationnelle dans laquelle, il assure la connexion entre les extrémités libres (8) et les sorties (5) du dispositif de production d'air (3)
**caractérisé en ce que :**
- on monte et on positionne le faux-plancher (2) dans l'habitacle véhicule notamment par glissement dudit faux-plancher (2) sous le dispositif de production d'air (3), positionnant les extrémités libres (8) en regard des sorties (5), l'élément de connexion (6) étant en position escamotée,
- on fait passer l'élément de connexion (6) de la position escamotée à la position opérationnelle, pour assurer la connexion entre les extrémités libres (8) et les sorties (5) du dispositif de production d'air.

11. Procédé selon la revendication 10, **caractérisé en ce que**, le faux plancher (2) étant un faux plancher de type suspendu double-coque, une face supérieure étant prévue pour constituer une partie du sol de l'habitacle du véhicule, et une face inférieure étant prévue pour s'étendre essentiellement au-dessus du plancher de la caisse du véhicule, lesdites faces formant entre elles au moins partiellement des conduits d'air intégrés, le procédé comprend une étape préalable à l'étape de montage et positionnement du faux plancher dans l'habitacle du véhicule, étape préalable dans laquelle :
- on monte des éléments de conduit intermédiaires (16) ayant chacun une première extrémité emmanchée dans un conduit d'air intégré correspondant, et
- on équipe l'extrémité libre de chaque l'élément de conduit intermédiaire avec un élément de positionnement relatif (6, 17) avec les autres extrémités libre des autres conduits intermédiaires.

## Claims

1. Passenger compartment (1) of a motor vehicle consisting of at least a first module (2) comprising at least a first ventilation duct (4) and at least a second module (3) comprising a second ventilation duct (5) connected to the first ventilation duct (4), **characterised in that** it comprises a movable connecting element (6) to connect the first ventilation duct (4) to the second ventilation duct (5), said connecting element (6) being mounted on one of the ventilation ducts (4, 5) to be movable between a retracted position, in which the ventilation ducts (4, 5) are free from one another to allow a relative positioning movement of the modules (2, 3) in relation to one another, and an operating position, in which the connecting element (6) assures the connection between the ventilation ducts (4,5).

2. Vehicle passenger compartment according to Claim 1, **characterised in that** the first module (2) is formed by at least one false floor element (2) and the second module (3) comprises at least one air feed device (3) integral to the passenger compartment (1) to supply said first ventilation duct (4), wherein the movable connecting element (6) is adapted to connect a free end (8) of said ventilation duct (4) to at least one outlet (5) of the air feed device (3), said connecting element (6) being mounted either on the free end (8) of said ventilation duct (4) or on said outlet (5) of the air feed device (3) to be movable between a retracted position, in which the free end (8) of the ventilation duct (4) and the outlet (5) of the air feed device (3) are free from one another to allow a relative movement of the false floor element (2) in relation to the passenger compartment (1) of the motor vehicle, and an operating position, in which the connecting element (6) assures the connection between the free end (8) of the ventilation duct (4) and the outlet (5) of the air feed device (3).

3. Vehicle passenger compartment according to Claim 2, **characterised in that** it comprises at least two air ducts, each being connected to an outlet of the air feed device, and a single connecting element to assure all connections in one operation.

4. Vehicle passenger compartment according to Claim 2 or 3, **characterised in that** the false floor is a suspended double-shell type false floor, wherein an upper face is provided to form a section of the floor of the passenger compartment of the vehicle and a lower face is provided to extend essentially above the floor of the body of the vehicle, said faces at least partially forming at least one integrated air duct between them.

5. Vehicle passenger compartment according to Claim 4, **characterised in that** at least one air duct comprises an intermediate duct element (16) included between an integrated air duct and an outlet of the air feed device.

6. Vehicle passenger compartment according to Claim 5, **characterised in that** it comprises at least two air ducts, each comprising an intermediate duct element (16) having a first end fitted into an integrated air duct, and a free end provided with a relative positioning clement (6, 17) for positioning it in relation to the other free ends of the other intermediate ducts.

7. Passenger compartment according to Claim 6, **characterised in that** the relative positioning element is the same as the connecting element.

8. Vehicle passenger compartment according to any one of Claims 2 to 7, **characterised in that** the connecting element (6) comprises a sleeve essentially coaxial to the free end or each of the free ends (8) and essentially coaxial to the outlet or each of the outlets (5) of the air feed device, the connecting element (6) being movable along the concentricity axis between the retracted position, in which it overlaps either with the free end or each of the free ends (8) or with the outlet or each of the outlets (5) of the air feed device, and an operating position, in which it overlaps with the free end or each of the free ends (8) and with the outlet or each of the outlets (5) of the air feed device.

9. Vehicle passenger compartment according to any one of Claims 1 to 8, **characterised in that** the connecting element (6) comprises sealing means, which enable the connection between the free end or each of the free ends (8) and the outlet or each of the outlets (5) of the air feed device to be sealed in relation to the passenger compartment of the vehicle in the operating position.

10. Method for installing a false floor (2) comprising ventilation ducts having free ends (8) in a vehicle passenger compartment provided with an air feed device (3) having air outlets (5) for connection to the free ends (8) of the ventilation ducts, the free ends (8) or the outlets (5) being provided with a connecting element (6) that is movable between:
• a retracted position, in which the free ends (8) and the outlets (5) of the air feed device are free from one another to allow a relative movement of the false floor (2) in relation to the interior of the motor vehicle, and
• an operating position, in which it assures the connection between the free ends (8) and the outlets (5) of the air feed device (3),
**characterised in that**
• the false floor (2) is installed and positioned in the vehicle passenger compartment in particular by sliding said false floor (2) under the air feed device (3), positioning the free ends (8) to face the outlets (5) with the connecting element (6) in the retracted position,
• the connecting element (6) is moved from the retracted position into the operating position to assure the connection between the free ends (8) and the outlets (5) of the air feed device.

11. Method according to Claim 10, **characterised in that** since the false floor (2) is a suspended double-shell type false floor with an upper face provided to form a section of the floor of the passenger compartment of the vehicle and a lower face provided to extend essentially above the floor of the body of the vehicle, said faces at least partially forming integrated air ducts between them, the method comprises a step preceding the step of installing and positioning the false floor in the passenger compartment of the vehicle, and in said prior step:
• the intermediate duct elements (16) are installed, each having a first end fitted into a corresponding integrated air duct, and
• the free end of each intermediate duct element is fitted with a relative positioning element (6, 17) for positioning it in relation to the other free ends of the other intermediate ducts.

## Patentansprüche

1. Karosseriegehäuse (1) für Motorfahrzeug mit zumindest einem ersten Modul (2), welches zumindest eine erste Belüftungsleitung (4) aufweist, und zumindest einem zweiten Modul (3), welches eine zweite Belüftungsleitung (5) aufweist, die mit der ersten Belüftungsleitung (4) verbunden ist, **dadurch gekennzeichnet, dass** es ein bewegliches Verbindungselement (6) zur Verbindung der ersten Belüftungsleitung (4) mit der zweiten Belüftungsleitung (5) aufweist, wobei das Verbindungselement (6) beweglich an der einen der Belüftungsleitungen (4, 5) zwischen einer eingezogenen Position, in welcher die Belüftungsleitungen (4, 5) zueinander frei angeordnet sind, was eine relative Positionierungsbewegung der Module (2, 3) untereinander zulässt, und einer Betriebsposition, in welcher das Verbindungselement (6) die Verbindung zwischen den Belüftungsleitungen (4, 5) sicherstellt, angebracht ist.

2. Fahrzeugkarosseriegehäuse gemäß Anspruch 1, **dadurch gekennzeichnet, dass** das erste Modul (2) zumindest von einem Zwischenbodenelement (2) gebildet ist und das zweite Modul (3) zumindest eine einstückig mit dem Karosseriegehäuse (1) ausgebildete Lufterzeugungsvorrichtung (3) aufweist, um die erste Belüftungsleitung (4) zu versorgen, dass das bewegliche Verbindungselement (6) dafür eingerichtet ist ein freies Ende (8) der Belüftungsleitung (4) mit zumindest einem Ausgang (5) der Lufterzeugungsvorrichtung (3) zu verbinden, wobei das Verbindungselement (6) entweder an dem freien Ende (8) der Belüftungsleitung (4) oder an dem Ausgang (5) der Lulfterzeugungsvorrichtung (3) beweglich angebracht ist zwischen einer eingezogenen Position, in welcher das freie Ende (8) der Belüftungsleitung (4) und der Ausgang (5) der Lufterzeugungsvorrichtung (3) zueinander frei angeordnet sind, was eine relative Bewegung des Zwischendeckenelementes (2) bezüglich des Karosseriegehäuses (1) des Motorfahrzeugs zulässt, und einer Betriebsposition,
in welcher das Verbindungselement (6) die Verbindung zwischen dem freien Ende (8) der Belüftungsleitung (4) und dem Ausgang (5) der Lufterzeugungsvorrichtung (3) sicherstellt.

3. Fahrzeugkarosseriegehäuse gemäß Anspruch 2, **dadurch gekennzeichnet, dass** es zumindest zwei Luftleitungen aufweist, die jeweils an einen Ausgang der Lufterzeugungsvorrichtung angeschlossen sind, und ein einziges Verbindungselement, um alle Verbindungen in einem Arbeitsschritt sicherzustellen.

4. Fahrzeugkarosseriegehäuse gemäß Anspruch 2 oder 3, **dadurch gekennzeichnet, dass** der Zwischenboden ein Zwischenboden der Art aufgehängte Doppelkarosserie ist, wobei eine obere Fläche dafür vorgesehen ist einen Teil des Karosseriebodens des Fahrzeugs zu bilden und eine untere Fläche dafür vorgesehen ist sich im Wesentlichen oberhalb des Bodens des Fahrzeuggehäuses zu erstrecken; wobei die Flächen zwischen sich zumindest teilweise zumindest eine integrierte Luftleitung bilden.

5. Fahrzeugkarosseriegehäuse gemäß Anspruch 4, **dadurch gekennzeichnet, dass** zumindest eine Luftleitung ein Zwischenleitungselement (16) aufweist, das zwischen einer integrierten Luftleitung und einem Ausgang der Lufterzeugungsvorrichtung angeordnet ist.

6. Fahrzeugkarosseriegehäuse gemäß Anspruch 5, **dadurch gekennzeichnet, dass** es zumindest zwei Luftleitungen aufweist, die jeweils ein Zwischenleitungseiement (16) ausweisen, welches ein erstes Ende aufweist, das in eine integrierte Luftleitung eingesteckt ist, und ein freies Ende, das mit einem Element zur relativen Positionierung (6, 17) mit den anderen freien Enden der anderen Zwischenfeitungen versehen ist.

7. Karosseriegehäuse gemäß Anspruch 6, **dadurch gekennzeichnet, dass** das relative Positionierungselement das gleiche ist wie das Verbindungselement.

8. Fahrzeugkarosseriegehäuse gemäß irgendeinem der Ansprüche 2 bis 7, **dadurch gekennzeichnet, dass** das Verbindungselement (6) eine praktisch koaxial mit dem oder jedem der freien Ende(n) (8) und praktisch koaxial mit dem oder jedem der Ausgänge (5) der Lufterzeugungsvorrichtung angeordnete Muffe aufweist, wobei das Verbindungselement (6) entlang der Koaxialitätsachse beweglich ist zwischen einer eingezogenen Position, in welcher es sich entweder mit dem oder jedem der freien Ende(n) (8) oder mit dem oder jedem der Ausgänge (5) der Lufterzeugungsvorrichtung überlappt, und einer Betriebsposition, in welcher es sich mit dem oder jedem der freien Ende(n) (8) und mit dem oder jedem der Ausgänge (5) der Lufterzeugungsvorrichtung überlappt.

9. Fahrzeugkarosseriegehäuse gemäß irgendeinem der Ansprüche 1 bis 8, **dadurch gekennzeichnet, dass** das Verbindungselement (6) Dichtungsvorrichtungen aufweist, welche ermöglichen in der Betriebsposition eine Dichtheit der Verbindung zwischen dem oder jedem der freien Ende(n) (8) und dem oder jedem der Ausgänge (5) der Lufterzeugungsvorrichtung gegenüber dem Fahrzeugkarosseriegehäuse sicherzustellen.

10. Verfahren zur Montage eines Zwischenbodens (2) mit freie Enden (8) aufweisenden Belüftungsleitungen in einem Fahrzeugkarosseriegehause, das mit einer Lufterzeugungsvorrichtung (3) versehen ist, welche Luftausgänge (5) aufweist, die mit den freien Enden (8) der Belüftungsleitungen zu verbinden sind, wobei die freien Enden (8) oder die Ausgänge (5) mit einem Verbindungselement versehen sind, das beweglich ist zwischen:
- einer eingezogenen Position, in welcher die freien Enden (8) und die Ausgänge (5) der Lufterzeugungsvorrichtung zueinander frei angeordnet sind, was eine relative Bewegung des Zwischenbodens (2) bezüglich dem Inneren des Motorfahrzeugs zulässt, und
- einer Betriebsposition, in welcher es die Verbindung zwischen den freien Enden (8) und den Ausgängen (5) der Lufterzeugungsvorrichtung (3) sicherstellt,
**dadurch gekennzeichnet, dass**:
- der Zwischenboden (2) in dem Fahrzeugkarosseriegehäuse insbesondere durch Gleiten des Zwischenbodens : (2) unter die Lufterzeugungsvorrichtung (3) angebracht und positioniert wird, wobei die freien Enden (8) gegenüber der Ausgänge (5) positioniert werden, und wobei sich das Verbindungselement (6) in der eingezogenen Position befindet,
- das Verbindungselement (6) aus der eingezogenen Position in die Betriebsposition gebracht wird, um die Verbindung zwischen den freien Enden (8) und den Ausgängen (5) der Lufterzeugungsvorrichtung sicherzustellen.

11. Verfahren gemäß Anspruch 10, **dadurch gekennzeichnet, dass** da der Zwischenboden (2) ein Zwischenboden der Art aufgehängte Doppelkarosserie ist, wobei eine obere Fläche dafür vorgesehen ist einen Teil des Karosseriebodens des Fahrzeugs zu bilden und eine untere Fläche dafür vorgesehen ist sich im Wesentlichen oberhalb des Bodens des Fahrzeuggehäuses zu erstrecken, wobei die Flächen zwischen sich zumindest teilweise integrierte Luftleitungen bilden das Verfahren einen Schritt vor dem Schritt der Montage und der Positionierung des Zwischenbodens in dem Fahrzeugkarosseriegehäuse aufweist, wobei der vorherige Schritt umfasst:
- Zwischenleitungselemente (16), die jeweils ein erstes Ende aufweisen, das in eine entsprechende integrierte Luftleitung eingesteckt ist, werden montiert, und
- das freie Ende jedes Zwischenleitungselementes wird mit einem Element zur relativen Positionierung (6, 17) mit den anderen freien Enden der anderen Zwischenleitungen versehen.
